# EUROPEAN PATENT APPLICATION

(11) **EP 1 350 982 A2**
(43) Date of publication of application: **08.10.2003**
(21) Application number: 03076002.9
(22) Date of filing: 03.04.2003
(51) Int. Cl.: F16D 65/78

(54) **System for controlling the temperature of a vehicle drive train component including coolant circulation**

(30) Priority: 03.04.2002 US 116408
(71) Applicant: Meritor Heavy Vehicle Technology LLC, Troy Michigan 48084-7186 (US)
(72) Inventor: Schneider, Mark M., Royal Oak, Michigan 48073 (US); Bowman, Larry W., Troy, Michigan 48098 (US); Ratts, Eric B., Northwille, Michigan 48167 (US); Sieber, Paul R., Rochester Hills, Michigan 48309 (US); Hildebrand, Robert W., Rochester Hills, Michigan 48309 (US); Johnson, Michael E., Rochester, Michigan 48306 (US)
(74) Representative: Wharton, Peter Robert

(57) **Abstract**

A system for controlling the temperature of a vehicle drive train component (24) utilizes coolant that is normally used to cool an engine (22) on the vehicle (20). At least one flow passageway (32,34) is associated with the drive train component housing. Coolant from the radiator (26) is selectively allowed to flow through the passageway where it absorbs heat from within the drive train component. The fluid is then returned to the radiator where heat can be dissipated in a conventional manner. A suitably programmed controller (42) preferably controls the amount of coolant fluid flow through the component and controls a fan (28) assembly associated with the radiator to ensure appropriate cooling of the fluid to achieve desired engine cooling and drive train component cooling.

## Description

### BACKGROUND OF THE INVENTION

This invention generally relates to a system for controlling the temperature of a vehicle drive train component. More particularly, this invention relates to a system including the use of circulating engine coolant within at least a portion of a drive train component to manage heat build up within the component.

A variety of vehicles are manufactured for a variety of purposes. Examples include passenger vehicles, heavy vehicles such as trucks, and off highway vehicles. Each type of vehicle has particular component requirements to meet the needs of the typical situation in which the vehicle is placed during use. Accordingly, a variety of vehicle components have been developed, each having its own benefits and, in some cases, shortcomings or drawbacks.

In off-highway type vehicles, for example, oil in the brake and axle assemblies tends to heat up during braking applications. In many cases, especially in the case of liquid filled wet disc brakes, the generated heat exceeds that which can be dissipated by the axle assembly or brake assembly using normal passive methods.

The heat build up must be dissipated to maximize component life and performance. The fatigue performance of components such as gears decreases with incremental rises in temperature. By maintaining an adequate temperature for such components, the fatigue performance is enhanced.

Vehicle manufacturers and suppliers have been forced to design complex and often undesirably costly cooling systems in an attempt to regulate the temperature within the components resulting from braking applications. Alternative heat dissipation techniques are needed.

This invention provides a temperature regulation strategy that economically maintains at least a portion of a drive train component, such as an axle or brake assembly, within a desired operating range.

### SUMMARY OF THE INVENTION

In general terms, this invention is a system using engine coolant circulation through at least a portion of a vehicle drive train component to control the temperature of that component.

A system designed according to this invention includes a radiator through which fluid flows having an inlet that receives the fluid at a first temperature and an outlet that permits the fluid to exit the radiator at a second, cooler temperature. The drive train component, such as an axle, includes a housing. At least one fluid flow passage is supported at least partially within the component housing. The flow passage is in fluid communication with the radiator such that the passage receives fluid from the radiator at the second temperature. The passage allows the fluid to flow through the passage where the fluid absorbs heat from within the drive train component and returns the heated fluid to the radiator.

One example includes a plurality of flow passageways through the component housing. The flow passageways may be provided in a number of ways. In one example, at least one tube is secured to the component housing. In another example, the flow passageways are formed as part of the housing during the process of manufacturing the housing.

The various features and advantages of this invention will become apparent to those skilled in the art from the following detailed description of the currently preferred embodiments. The drawings that accompany the detailed description can be briefly described as follows.

### BRIEF DESCRIPTION OF THE DRAWINGS

Figure 1 schematically illustrates a vehicle incorporating a system designed according to this invention.
Figure 2 schematically illustrates selected portions of the embodiment of Figure 1 in somewhat more detail.
Figure 3 is a cross sectional illustration of a portion of an example axle housing designed according to this invention.
Figure 4 is a cross sectional illustration of a portion of another example axle housing designed according to this invention.
Figure 5 is a cross sectional illustration of a portion of another example axle housing designed according to this invention.

### DETAILED DESCRIPTION OF THE PREFERRED EMBODIMENTS

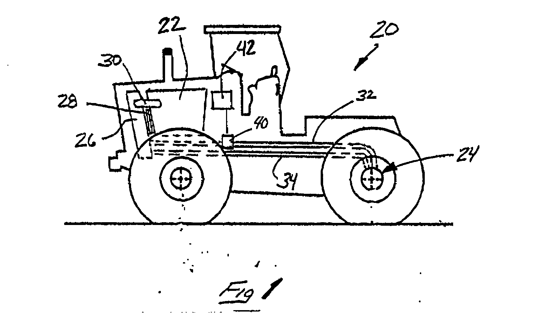

An off-highway vehicle 20 is schematically shown in Figure 1. A variety of vehicles may benefit from incorporating the inventive arrangement into at least one drive train component. Off-highway vehicles, in particular, will benefit from the ability of the inventive arrangement to dissipate heat from an axle assembly, especially those that include a wet disc brake arrangement. The inventive arrangement is particularly useful for dissipating heat from an axle assembly where the lubricating fluids heat up during repeated braking applications. This invention is not necessarily limited, however, to such vehicles or such axle assemblies.

An engine 22 on the vehicle 20 provides a motive force to drive train components such as axles 24 to propel the vehicle as needed. Only selected portions of the vehicle are schematically illustrated. Those skilled in the art will recognize that a variety of non-illustrated components, such as a transmission, are required to appropriately transfer the motive force from the engine 22 to the axle 24 and associated wheels.

A radiator 26 and fan assembly 28 are supported on the vehicle 20 to provide cooling to the engine 22 in a known manner. A conventional fluid coupling 30 provides an exchange of coolant between the engine 22 and the radiator 26 in a conventional manner. Hot coolant fluid from the engine 22 passes through the radiator 26 where it is cooled, in part, because of air flow caused by the fan assembly 28 across fins (not illustrated) of the radiator 26 as known.

The inventive assembly includes using the coolant that passes through the radiator 26 to assist in controlling heat build up within one or more of the drive train components. The illustrated example focuses on the axle assembly 24. Other portions of the vehicle drive train may incorporate an arrangement consistent with this invention.

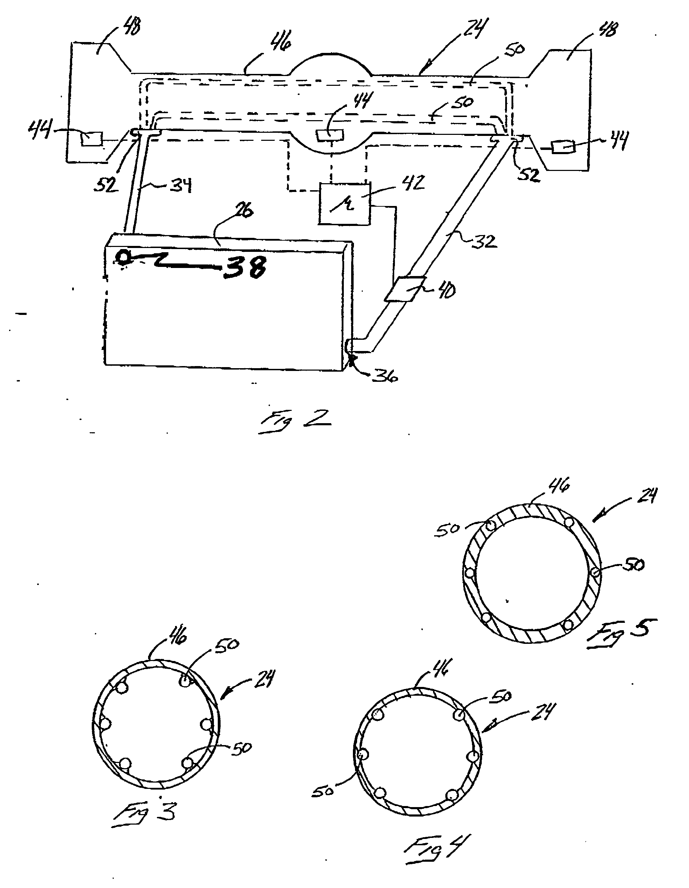

A supply line 32 allows for coolant to be provided to the axle assembly 24 from the radiator 26. A return line 34 facilitates returning coolant to the radiator after the coolant has absorbed heat from the axle assembly 24. As shown in greater detail in Figure 2, the supply line 32 is coupled to an outlet 36 on the radiator while the return line 34 is coupled to an inlet 38. The outlet 36 and inlet 38 may be the same as used to communicate fluid for cooling the engine 22. Appropriate valving or couplings (not illustrated) preferably allow the same fluid to be used for cooling the engine 22 and the axle assembly 24 while also allowing a desired, controlled flow of such coolant. Those skilled in the art who have the benefit of this description will be able to use commercially available components to realize a suitable plumbing strategy to meet the needs of their particular situation.

The illustrated example includes a valve arrangement 40 on the supply line 32. A controller 42 communicates with and controls the valve assembly 40. The controller 42 preferably communicates with one or more temperature sensors 44 associated with the axle assembly 24. A variety of suitable temperature sensors are known. The illustrated example includes at least one temperature sensor 44 associated with an axle assembly portion 46 of the assembly 24 and a plurality of sensors 44 associated with brake assembly portions 48 of the component assembly 24.

The controller 42 preferably is programmed to recognize a temperature of the component 24. When that temperature is higher than desired, the controller 42 preferably causes operation of the valve assembly 40 to permit coolant flow from the radiator 26 through the supply line 32 to at least one flow passageway 50 associated with the component assembly 24. An auxiliary or engine coolant pump (not illustrated) must be incorporated into a system designed according to this invention to facilitate coolant flow. The illustrated example includes fittings 52 that allow fluid communication between the supply line 32, return line 34, and the flow passageways 50 within the axle housing. The fluid preferably flows generally in a counterclockwise direction according to Figure 2. As the coolant fluid flows through the flow passageways 50, the fluid absorbs heat from within the component assembly 24 and allows for that heat to be dissipated through the radiator 26 as the coolant flows through the radiator. The radiator 26 operates in a conventional manner.

The controller 42 preferably controls operation of the fan 28 to ensure proper engine cooling and the desired amount of axle assembly cooling.

The flow passageways 50 may be associated with the component assembly in a number of ways. Several examples are schematically illustrated in cross-section in Figures 3, 4 and 5. In each of these examples, six flow passageways 50 are provided at least partially within the axle housing portion 46 of the component assembly 24. In the example of Figure 3, preformed tubes 50 are secured to an inner surface of the inside of the housing 46. In the example of Figure 4, the flow passageways 50 are at least partially embedded into the body of the housing 46. In the example of Figure 5, the flow passageways 50 are completely within the body of the housing 46. The flow passages may be straight, serpentine or circumferentially spiral as they extend through the housing 46.

Those skilled in the art who have the benefit of the description will realize that there are a variety of ways to incorporate at least one flow passageway at least partially within a drive train component housing to facilitate coolant fluid flow through the component assembly to absorb heat from the housing and then to transfer that coolant to a radiator where the heat can be effectively dissipated. Only three such examples are illustrated. It is preferred to position the flow passageways 50 relative to the housing such that heat within a lubricant within the axle assembly, brake assemblies or both is absorbed by the coolant flowing through the passageways 50 so that the heat is more effectively transferred out of the assembly.

The inventive arrangement takes advantage of the cooling effect provided by a radiator already present on the vehicle. The additional cooling effect provided by this invention greatly enhances the ability to control the operating temperature of a drive train component in which lubricant or other fluids, and operating portions of the assembly, tend to heat up beyond desired temperatures.

The controller 42 preferably is programmed to cause fluid flow through the passageways 50 whenever the temperature within the component 24 goes beyond a chosen threshold. The appropriate temperature selection will depend upon the particular components involved and the particular type of vehicle with which the components are associated. Those skilled in the art who have the benefit of this description will be able to appropriately select such parameters and to appropriately program a commercially available microprocessor to function as the controller 42 of this description. In one example, the controller 42 is a dedicated microprocessor. In another example, the controller 42 is a dedicated portion of an engine controller already present on the vehicle.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. A system for cooling a drive train component assembly, comprising:
a radiator through which fluid flows having an inlet that receives the fluid at a first temperature and an outlet that permits the fluid to exit the radiator at a second, cooler temperature;
a component housing;
at least one fluid flow passage associated with the housing, the passage being in fluid communication with the radiator such that the passage receives fluid from the radiator at the second temperature, allows the fluid to flow through the passage where the fluid absorbs heat from within the component assembly and returns the heated fluid to the radiator.

2. The system of claim 1, including a wet disc brake assembly supported in the housing and wherein the passage extends at least partially along the portion of the housing that contains the brake assembly.

3. The system of claim 1, including a plurality of the passages.

4. The system of claim 3, wherein the passages are preformed tubes that are secured within the housing.

5. The system of claim 3, wherein the passages comprise openings extending through at least a portion of the housing that are formed as part of the housing.

6. The system of claim 1, including a flow control valve that regulates fluid flow through the passage, the flow control valve selectively permitting fluid flow through the passage when a temperature of a selected portion of the component assembly is above a selected temperature.

7. The system of claim 1, including at least one temperature sensor supported relative to the housing that provides an indication of a temperature of the assembly and a controller in communication with the temperature sensor, the controller determining when the temperature of the assembly exceeds a chosen temperature and responsively controls fluid flow through the passage.

8. The system of claim 7, including a fan associated with the radiator that directs airflow toward the radiator to facilitate cooling of the fluid within the radiator and wherein the controller controls operation of the fan.

9. The system of claim 7, including a valve that regulates fluid flow through the passage, the controller operating the valve to control fluid flow depending on the determined temperature of the assembly.

10. The system of claim 9, including a supply conduit coupling the passage to the radiator outlet and wherein the valve is associated with the supply conduit.

11. A method of cooling an axle assembly, comprising the steps of:
providing at least one fluid flow passage at least partially within a housing portion of the axle assembly;
coupling the passage with a radiator through which fluid flows where the fluid is cooled;
selectively allowing cooled fluid from the radiator to flow through the passage where the fluid absorbs heat from within the axle assembly; and
allowing the heated fluid to flow through the radiator to be cooled.

12. The method of claim 11, including determining a temperature of the axle assembly and performing the step of allowing fluid to flow through the passage when the temperature is above a chosen temperature.

13. The method of claim 11, including providing a plurality of passages at least partially within the housing.

14. The method of claim 13, including forming the passages as separate members and securing them within the housing.

15. The method of claim 13, including forming the passages as part of the housing.

16. A vehicle axle assembly, comprising:
a housing;
a plurality of operative components supported within the housing; and
at least one fluid flow passage supported at least partially within the housing and extending along a selected portion of the housing, the passage being adapted to be coupled with a radiator associated with an engine such that fluid from the radiator can flow through the passage where the fluid can absorb heat from within the axle assembly and return the heated fluid to the radiator.

17. The assembly of claim 16, including a wet disc brake portion supported near an end of the assembly within the housing and wherein the passage is at least partially associated with the portion of the housing that contains the brake portion.

18. The assembly of claim 16, including a plurality of the passages.

19. The assembly of claim 18, wherein the passages are preformed separate from the housing that are secured within the housing.

20. The assembly of claim 18, wherein the passages comprise openings extending through at least a portion of the housing that are formed as part of the housing.
